(19) Europäisches Patentamt / European Patent Office / Office européen des brevets

(11) **EP 2 119 204 B1**

(12) **EUROPEAN PATENT SPECIFICATION**

(45) Date of publication and mention of the grant of the patent:
**26.09.2018 Bulletin 2018/39**

(51) Int Cl.:
*H04M 3/22* (2006.01)   *H04M 7/00* (2006.01)

(21) Application number: **07861110.0**

(22) Date of filing: **17.12.2007**

(86) International application number:
**PCT/SE2007/051015**

(87) International publication number:
**WO 2008/094092 (07.08.2008 Gazette 2008/32)**

(54) **METHOD AND ARRANGEMENT FOR VIDEO TELEPHONY QUALITY ASSESSMENT**

VERFAHREN UND ANORDNUNG ZUR QUALITÄTSBEWERTUNG DER VIDEOTELEFONIE

PROCÉDÉ ET AGENCEMENT POUR UNE ÉVALUATION DE QUALITÉ DE VISIOPHONIE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **02.02.2007 US 899038 P**

(43) Date of publication of application:
**18.11.2009 Bulletin 2009/47**

(73) Proprietor: **Telefonaktiebolaget LM Ericsson (publ)**
**164 83 Stockholm (SE)**

(72) Inventors:
• **EINARSSON, Torbjörn**
**S-112 40 Stockholm (SE)**
• **GUSTAFSSON, Jörgen**
**S-972 52 Luleå (SE)**
• **HEIKKILÄ, Gunnar**
**S-954 31 Gammelstad (SE)**
• **PETTERSSON, Martin**
**S-195 33 Märsta (SE)**
• **TAN, Xiangchun**
**N-7049 Trondheim (NO)**

(74) Representative: **Ericsson**
**Patent Development**
**Torshamnsgatan 21-23**
**164 80 Stockholm (SE)**

(56) References cited:
WO-A1-03/032563      GB-A- 2 424 792
US-A1- 2004 175 056      US-A1- 2006 221 942

• **XIAOMING ZHOU ET AL.: 'Estimation of Perceived Quality of Service for Applications on IPv6 Networks' THE 2006 ACM INTERNATIONAL WORKSHOP ON PERFORMANCE MONITORING, MEASUREMENT, AND EVALUATION OF HETEROGENEOUS WIRELESS AND WIRED NETWORKS, TORREMOLINOS (MALAGA) SPAIN, [Online] 06 October 2006, pages 74 - 81, XP003022775 Retrieved from the Internet: <URL:http://www.doi.acm.org/10.1145/1163653 . 1163667>**

**Description**

TECHNICAL FIELD

The present invention generally relates to telecommunication systems in general, specifically to and in particular to quality assessment for video telephony media in such systems.

BACKGROUND

To ensure good quality of experience for a service, telecommunication system operators (for both wireless and wired networks) use tools and measurements to locate and prevent problems of a network or service at an early stage. With a good tool, the network can also be optimized to allow more users to have "good-enough" experience of the offered services given certain network resources. Some services require only that a few network parameters, such as throughput, be measured to give a good estimate of the quality for the end user. When it comes to media services, such as video telephony, the task of measuring quality of experience is not just as trivial since there are several factors that may contribute to the degraded quality, including the media itself.

The best known way of determining quality of video telephony media is to let a panel of test persons subjectively grade each video telephony call and give a subjective quality score (e.g. MOS). This is of course practically infeasible in a real time scenario. Instead the subjectively perceived video quality can be estimated with an objective quality assessment model.

Most known solutions used for objective video quality assessment are based on video image analysis algorithms running on the decoded video images.

Many of these are also useable to measure the quality of video telephony to some extent. The ones giving the best result, the full reference models, require a reference video for comparison. Others rely on estimating the quality by assessing only the degraded video itself.

At present there is a plurality of commercially available products or tools that can be used for assessing the quality for video telephony:

- PEVQ from Opticom [1] is a full-reference model based on image analysis. The algorithm outputs a MOS-like score.
- VQuad from SwissQual [2] is a full-reference model based on image analysis. SwissQual also has a non-reference model called Vmon. Both can be used for determining video quality.
- Optimacy tool from Genista [3] is both a non-reference and a full reference model based on image analysis.

The prior art algorithms based on video image analysis are very computational demanding and require large amount of processing power. Even though many of them can be run in close to real-time, the complexity of the algorithms has then been decreased which probably leads to a worse estimate of video quality.

Many of prior art algorithms are full-reference models requiring a reference video to compare the degraded to. This is not always convenient if one wish to test some other video content. A full-reference model always gives the score for a certain video sequence, not the average score for typical video content. The average score is what a mobile operator (or wired operator) normally wants. Finally, to get a valid score the synchronization between the reference and the degraded video in a full-reference model must also be exact.

Amongst prior art solutions, a few are worth mentioning. The document US 20060221942 relates to a method and a system for passive (and proactive) monitoring of voice quality across a telecommunication network, and for reporting monitoring data to a central network management system. The document by Xiaoming Zhou et al "Estimation of Perceived Quality of Service for Applications on IPv6 Networks" discloses a comparison of delay and loss performance between IPv6 and IPv4 performance measurements. In particular, the document compares the two by assessing the perceived quality of VoIP, Video-over-IP and data communication services based upon TCP. The document GB 2424792 discloses a bi-directional file-play-record voice and video quality tester system (CFPR-WQT) for measuring the quality of voice or video communication links from a customer premises equipment through a network under test to a voice and video quality tester (WQT). The CFRR-WQT will measure the quality testing sample signals, determine a signal quality test result, and then transmit the results back through network under test to the originating WQT.

Therefore there is a need for methods and arrangements enabling improved objective video telephony quality assessment, and particularly without the need for comparison to a reference video telephony call.

SUMMARY

The present invention overcomes these and other drawbacks of the prior art arrangements and methods.

According to an aspect, the present invention provides improved quality assessment of video telephony services.

According to a further aspect, the present invention enables objective quality assessment based on a partly decoded video telephony session.

Yet another aspect of the present invention enables a quality assessment model that takes both transmission parameters and coding parameters into consideration.

Briefly, the present invention comprises a method of quality assessment for a multimedia signal comprising video telephony media in a video telephony system, in which a multimedia signal is received (S10), a plurality of parameters representative of said multimedia signal are extracted (S20), and an objective quality measure is determined (S30) for the video telephony media based on representations of at least two of the extracted parameters.

Advantages of the present invention comprise:

An improved quality assessment model for video telephony services;
A parametric quality assessment model that does not require that the media is fully decoded.
An objective quality measure of a video telephony session;

BRIEF DESCRIPTION OF THE DRAWINGS

The invention, together with further objects and advantages thereof, may best be understood by referring to the following description taken together with the accompanying drawings, in which:

Fig. 1 is a schematic block diagram of a system comprising an embodiment of the present invention;
Fig.2 is a schematic block diagram of a further system comprising an embodiment of the present invention;
Fig. 3 is a schematic flow diagram of an embodiment of a method according to the present invention;
Fig. 4 is a schematic block diagram of an arrangement according to the present invention.

ABBREVIATIONS

| | |
|---|---|
| AMR-NB | Adaptive Multi Rate-Narrow Band |
| BLER | Block Error Ratio |
| CRC | Cyclic Redundancy Check |
| CS | Circuit Switched |
| DTX | Discontinuous Transmission |
| GOB | Group Of Blocks |
| MOS | Mean Opinion Score |
| MTU | Mobile Test Unit |
| PS | Packet Switched |
| RTCP | Real-Time Control Protocol |
| RTP | Real-Time Protocol |

DETAILED DESCRIPTION

The present invention will be described in the context of a general video telephony system in which a video telephony session (two-way or one-way) is active between a video telephony provider and a receiving arrangement. The receiving arrangement can be a mobile terminal or other mobile equipment (e.g. laptop, PDA, etc.), or a test terminal for assessing the quality of the session and/or system, or an intermediate network node.

In its most general aspect the present invention enables objectively estimating a quality score or measure relating to perceived audio quality, video quality or total quality for a video telephony service or media in a mobile or fixed network by utilizing information from the network itself and from the coding of the actual video telephony media stream. It is then possible to map or compare the objective estimate to a subjective quality score such as a MOS score. In the following disclosure, the term media will be used as encompassing the combination of audio and video.

Consequently, a basic embodiment of the present invention includes determining an objective quality measure for a video telephony stream/media/call in a multimedia signal in a video telephony system. The quality measure is determined based on parameters or representations of parameters extracted from the multimedia signal. The parameters or representations thereof can comprise transmission parameters relating to the radio network, the transport network, and/or coding parameters relating to the actual encoded video telephony session/media/call.

The present invention provides objective estimates of one or more of total quality, video quality or audio quality for a video telephony service based on information extracted from a video telephony session or call.

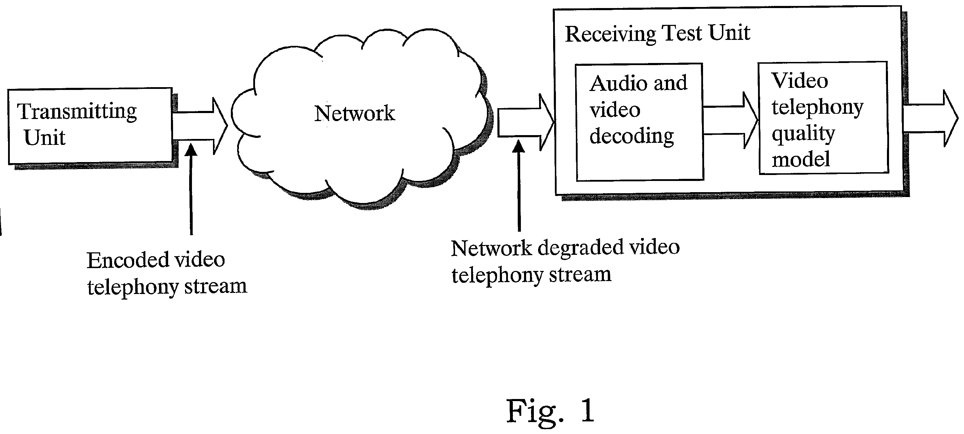

A general system in which the present invention can be implemented is illustrated in FIG1, in which a video quality assessment model according to present invention is indicated in the box labeled "Video telephony quality model" that is implemented in a receiving test unit.

The network can be a packet switched (PS) or circuit switched (CS) network or a combination of the two. It could also be some other kind of network or connection, such as a cable. The system can be bidirectional in that a test unit can be both transmitting and receiving.

In a preferred embodiment, the transmitting unit is a mobile device or video telephony server transmitting a video telephony stream or media over a CS mobile network. The receiving test unit is de-multiplexing the stream and decoding the audio and video media of the stream. Given transmission and coding information an estimated quality score, according to the present invention, is calculated.

The network can also be considered a mobile or fixed PS network where the transmitting unit can be a PC-client or a mobile device transmitting audio and video streams separately. The receiver unit, which can be a mobile or PC-client based test unit, is decoding the audio and video streams and calculates an estimated quality score given transport and coding information.

Other possible networks include combinations of the above-mentioned networks.

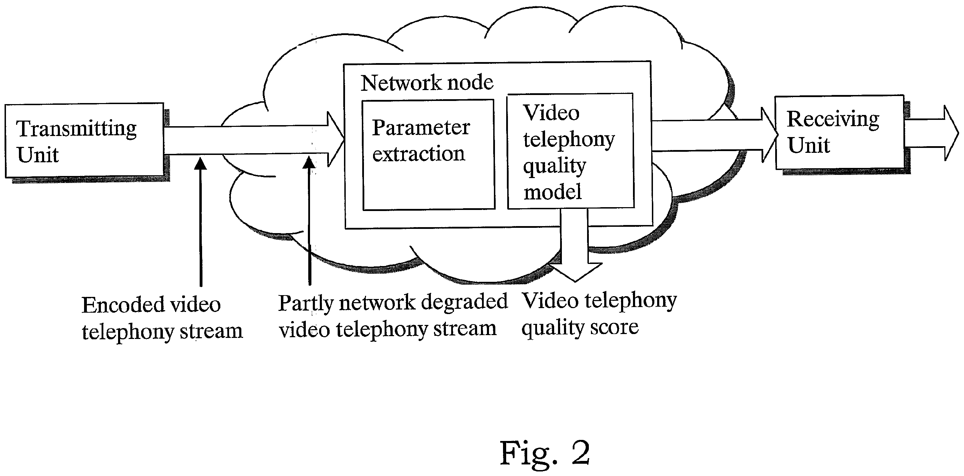

According to a further embodiment, with reference to Fig. 2, the test unit with a video telephony quality model according to the present invention is located in an intermediate network node between the transmitting unit and the receiving unit. This allows for measuring media quality in certain parts of the network. However, if the network is a PS network and the stream is encrypted, limited information can be received from the stream itself.

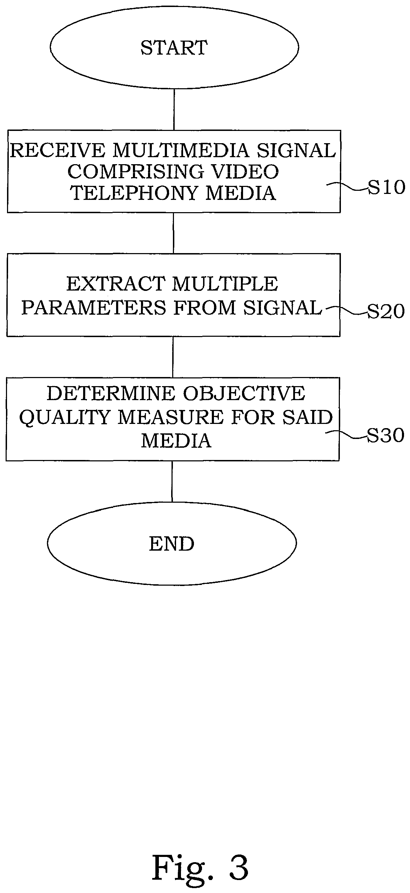

With reference to Fig. 3, an embodiment of a method according to the present invention comprises receiving S10 a multimedia signal in a video telephony system, the multimedia signal comprising video telephony media. Subsequently (or simultaneously) a plurality of parameters are extracted S20 from the received media signal. Finally, an objective quality measure for the video telephony media is determined S30 based on a subset, at least two, of the extracted parameters.

For a particular embodiment, the subset comprises three parameters, i.e. video codec, total coded bitrate and BLER for the received multimedia signal.

Some of the possible parameters or representations of which can be utilized are:

Radio network parameters:

- **Radio BLER**
- Radio bearer used

Transport network parameters

- **Packet loss**
- Data throughput
- Packet jitter data
- Packet jitter buffer strategy
- IP packet size
- RTP/RTCP signaling

Other codec independent parameters:

- CRC error ratio for audio and video (from H.223 de-multiplexer)
- Number of CRC error for audio and video (similar to the one above)
- **Total bitrate**
- Video bitrate
- Audio bitrate
- Number of bits per video frame
- **Audio-video synchronization time difference**
- **Target video frame rate**
- Video type

Codec information

- **Audio codec (e.g. AMR-NB, G.723)**
- **Video codec (e.g. H.263, MPEG-4, H.264)**

- Video codec profile
- Video codec level

Audio coding dependent parameters

- **Audio codec mode (e.g. AMR-mode)**
- Use of DTX or not

Video coding dependent parameters requiring parsing of first couple of bytes in a bit stream

- **Picture Quantizer**
- Actual video frame rate (variations are important)
- Number of video segments (GOBs, slices, video packets) per frame
- Intra or inter picture
- Coding tools used

Video coding parameters requiring full bit parsing

- Number of intra macro-blocks per picture
- Intra refresh strategy (educated guess)
- Differential quantizers and average/min/max quantizer per picture
- Number of macro-blocks per segment
- Average, max and min absolute motion vectors

According to a preferred embodiment, the extracted parameters or representations thereof comprise all parameters above that are marked in bold. The representations can comprise estimates of the parameters or actual measurements thereof. Preferably, representations of all bold parameters are included in the quality measure for the video telephony media.

According to a further embodiment, one or more of the non-bold parameters or representations thereof are included in the quality measure to further improve the accuracy of the quality estimation. Some of the listed parameters can be used to estimate or represent other more vital parameter. As an example, given the radio bearer an assumption of the total bitrate can be determined and used as on of the extracted parameters.

Transport network parameters can be included when the video telephony media streams are transported over a PS network. Some of the network parameters, such as packet loss, are also valid for a CS core network.

Concerning video jitter and video jitter buffers, a brief description is disclosed below. Video packets sent over a PS network are not guaranteed to arrive at an exact or even rate or even in a correct order. Jitter is the term used for a packet stream with uneven arrival rate. Different networks have different jitter distribution and different sized jitter spikes. Depending on buffer size and buffer strategy the consequences of jitter varies from one network to another, or even within the same network.

Some alternative for managing jitter buffers for video:

- Use a minimal buffer size. Video streams are played back directly upon arrival which may result in jerkiness when there is a large amount of packet jitter
- Use a large buffer size. Video streams are played back at the correct rate but the end-to-end delay is larger. For a real-time service, the delay cannot be too long. The buffer size is thus a tradeoff between acceptable jitter and end-to-end delay.
- Use an adaptive buffer size. An adaptive buffer changes the buffer size depending on the jitter characteristics. At low levels, the buffer is reduced and at high levels, it is increased. The speed of the adaptation is an important parameter to set. Depending on the application, the jitter buffer may even select the rate at which a packet following a late packet should be played back, directly or at a somewhat faster pace than real-time until an acceptable delay is restored.

In addition, it is necessary to consider the reality of packets not arriving at all. Consequently, it is necessary to consider how long it is acceptable to wait for a packet before discarding it. This is something that affects the size of the jitter spikes. A discarded video packet results in a so-called spatial artifact.

Concerning coding or codec parameters relating to the actual video telephony stream/media/call, they can be extracted from at least partly decoded (or parsed) received video telephony media streams, or from fully decoded video telephony media streams depending on the model requirements.

According to a specific embodiment, three parameters are extracted from the received multimedia signal.

One possible embodiment of a function for calculation of a quality measure or score $Qual_{pred}$ based on some of the above-mentioned parameters can be expressed as:

$$Qual_{pred} = f(c, n, r) \quad (1)$$

where c is a representation of the extracted coding related parameters, n is a representation of the extracted network related parameters, and r is a representation of the extracted parameters affecting the robustness of the video telephony media, and f is a predetermined selected function.

The coding parameters include all parameters relevant to determine the error-free base quality of the video telephony media. If errors are introduced in the network, the network related parameters determine the degradation of quality of the media. The robustness parameters are used to decrease the estimated degradation based on the robustness tools used in the encoding of the media. The robustness parameters may include number of video segments per frame, intra or inter picture information, number of intra macro-blocks per picture and intra refresh strategy.

A basic principle of how the quality score can be calculated is built on the calculated based quality of the clean coded media. The base quality score is then altered to reflect the network degradation and the used robustness tools of the current media. The term clean coded media refers to the theoretical best possible quality for a certain combination of codec, frame rate, bit rate, wherein no transport problems exist.

In another embodiment of the present invention, the quality score function can more specifically be described as a geometrical function:

$$Qual_{pred} = f(c) \cdot g(r, n) \quad (2)$$

where $f(c)$ is the quality score for the clean coded media sequence and $g(r,n)$ a value between 0 and 1 reflecting the degradation from the network given the used robustness tools.

In yet another embodiment of the present invention the quality score function can be described as

$$Qual_{pred} = Qual_{robust} \quad (3)$$

when

$$Qual_{clean} = f(c) \quad (4)$$

$$Qual_{network} = g(Qual_{clean}, n) \quad (5)$$

$$Qual_{robust} = h(Qual_{clean}, Qual_{network}, r) \quad (6)$$

where f, g and h are suitable selected functions. $Qual_{clean}$ is the quality of the clean coded media. $Qual_{network}$ is the quality of the media after the network degradations. $Qual_{robust}$ is the quality of the media after network degradations with respect of the robustness tools used. The $Qual_{clean}$ score must be used as an input to the $Qual_{robust}$ score to ensure that the quality will not be better than $Qual_{clean}$. $Qual_{robust}$ may however be less than $Qual_{clean}$ even if $Qual_{network} = Qual_{clean}$ due to that the used robustness tools may introduce extra overhead which can lower the overall quality for the media.

It is also possible to consider a solution where a base media quality is calculated and the network related parameters degrading the quality are subtracting a value from the score and the robustness related parameters are adding (or subtracting) another value to the score.

The quality score, according to a further embodiment, can be estimated momentarily or as a function over a certain time. If the quality score is estimated momentarily a sliding window has to be used for many of the parameters, such as BLER and actual frame rate, to avoid peak values that will give quality scores that are not representative for the perceived quality. The sliding window can for example be 8 seconds long; long enough to avoid misrepresentative peaks but still short enough to avoid too flattening averaging effects.

For illustrative reasons a quality score function based on a small subset of the described parameters has been tested in a video telephony quality model. The model has been mapped to the results of a subjective test where a group of test subjects were grading short video telephony sequences encoded and degraded with different video codecs, target video frame rates and radio BLER. The following function Equation 7, was used for the model:

$$MOS_{pred} = \begin{cases} \beta_0 + \beta_1 \cdot BLER & if \quad BLER < threshold \\ 1 & if \; BLER > threshold \end{cases} \qquad (7)$$

where $0 \leq BLER \leq 1$ and $\beta = (\beta_0, \beta_1)$. Different values for $\beta$ were used for the different video codecs. In the above describer example $\beta_0$ represents the parameter related to the clean coded media quality and $\beta_1$ represents the parameter corresponding to the network degradation.

According to a further model (taking more then two parameters into consideration) , the above example function can be refined according to Equation 8 below:

$$MOS_{pred} = \begin{cases} \beta_0 + \beta_1 \cdot (\beta_2 + \beta_3 \cdot BLER) & if \quad BLER < threshold \\ 1 & if \; BLER > threshold \end{cases} \qquad (8)$$

Using the same terminology as described above one could say that $\beta$ represents the quality of the clean coded media while BLER represents the quality degradation introduced by the CS network.

The present invention can also provide mapping to the results from other objective models to improve the inventive model.

The model of the present invention can be used to monitor the quality of a real two-way video telephony phone call. It can also estimate the quality when a video telephony stream is sent over a network one-way. This is suitable when testing the video telephony service in a network.

The model is a parametric model based on parameters from the radio network, transport network as well as audio and video coding parameters. Possible parameters include radio block error ratio (BLER), radio bearer, packet loss, used audio and video codecs, video frame rate and video quantizers. However, for some instances the model can be regarded as a bitstream model. The difference lies in if the model utilizes only provided parameters without decoding (partly of fully) the actual media, or if also at least partly decoded media is utilized.

Parameters are preferably extracted and collected in real-time and a quality score is calculated using the disclosed model. The score can for example be an estimation of MOS. The model is used with advantage in a circuit switched (CS) mobile network but can also be used in a packet switched (PS) network or a combination of the two.

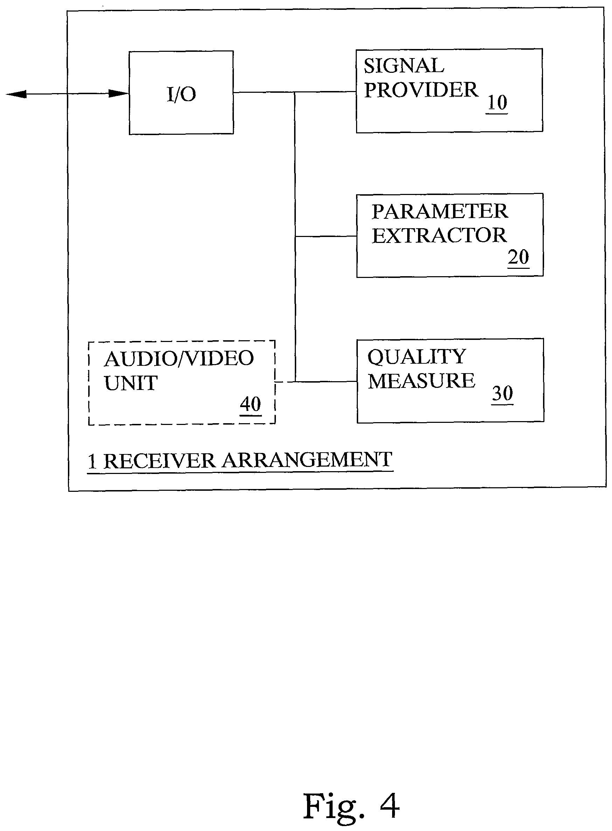

A receiver arrangement for enabling the above described embodiments of a method according to the present invention will be described with reference to Fig. 4 (and Fig. 1, Fig.2).

The arrangement 1 for quality assessment of a multimedia signal comprising video telephony media in a video telephony system, comprises a unit 10 for receiving the multimedia signal from a transmitting unit, a unit 20 for extracting multiple parameters from said multimedia signal. The extracting unit is adapted to extract parameters comprising both parameters indicative of transmission conditions as well as specific coding related parameters. In addition, the arrangement 1 comprises a quality determining unit 30 for determining an objective quality measure for the video telephony media based on representations of some or all of the extracted parameters.

The extracting unit 20 can be further adapted for extracting the parameters from an at least partly decoded segment of the video telephony media, or alternatively adapted for extracting the parameters from a fully decoded segment of the video telephony media.

In addition, the arrangement may comprise a unit 40 for supporting processing of audio/video content of the multimedia signal.

In summary, the present invention discloses a parametric model that does not require that the media of the video telephony stream is fully decoded to objectively (or subjectively) estimate its quality. The algorithm is therefore computationally efficient and can with advantage be implemented for real-time usage with low demands on hardware performance. This is often a challenging task for algorithms based on video image analysis.

Since the model can use many important quality parameters from the network and from the coding, a probable cause for the quality degradation can be determined with high accuracy.

Many of the known algorithms based on image analysis require a reference video for comparison. The present invention does not compare and is therefore not facing the problems where exact frame synchronization between reference and test sequence is needed.

The present invention discloses that a quality score is calculated for audio quality, video quality and/or a total quality for a video telephony service. This also separates the invention from models only using video image analysis.

Parametric models, like taught by the invention, if properly trained have the option of giving the average score for all typical video contents for video telephony. A video image analysis model, unlike the present parametric model, will always give the score for a certain video content. In a test situation the average of all content is often what is wanted, since a mobile video telephony user will experience the quality of the content he receives at that point, and there is no way of knowing exactly what content it is. The average score will give the average satisfaction of video telephony users.

It will be understood by those skilled in the art that various modifications and changes may be made to the present invention without departure from the scope thereof, which is defined by the appended claims.

REFERENCES

[1] PEVQ from Opticom. http://www.opticom.de
[2] VQuad and Vmon algorithms from SwissCal. http://www.swissqual.com
[3] Optimacy tool from Genista. http://www.genista.com

**Claims**

1. A method of quality assessment for a multimedia signal comprising video telephony media for a video telephony system, comprising the steps of:

    receiving (S10) said multimedia signal;
    extracting (S20) a plurality of parameters from said multimedia signal, and
    determining (S30) an objective quality measure for said video telephony media based on representations of at least three of said extracted parameters, said at least three parameters including at least one of each of coding parameters, network parameters and robustness parameters,
    wherein said plurality of parameters is extracted without fully decoding said multimedia signal.

2. The method according to claim 1, said determining step comprising calculating said objective quality measure according to the following

$$Qual_{pred} = f(c,n,r)$$

where $Qual_{pred}$ is the quality measure or score, $f$ is a predetermined selected function, $c$ is a representation of extracted coding parameters, $n$ is a representation of extracted network parameters and $r$ is a representation of extracted parameters affecting the robustness of the media.

3. The method according to claim 1, comprising extracting said plurality of parameters from an at least partly parsed segment of the multimedia signal.

4. The method according to claim 1, comprising extracting said plurality of parameters from a fully parsed segment of the multimedia signal.

5. The method according to claim 1, said network parameters comprising both radio network parameters and transport network parameters.

6. The method according to claim 5, comprising the step of selecting said radio network parameters from the group of radio BLER or radio bearer type.

7. The method according to claim 5, comprising the step of selecting said transport network parameters from the group of packet loss, data throughput, packet jitter data, jitter buffer strategy, IP packet size, RTP/RTCP signaling.

8. The method according to claim 1, said coding parameters comprising codec information.

9. The method according to claim 8, comprising the step of selecting said codec information from the group of audio codec, video codec, video codec profile, video codec level.

10. The method according to claim 1, said coding parameters comprising audio coding dependent parameters.

11. The method according to claim 10, comprising selecting said audio coding dependent parameters from the group of audio codec mode, use/non-use of DTX.

12. The method according to claim 1, said coding parameters comprising video coding dependent parameters.

13. The method according to claim 12, the step of selecting video coding dependent parameters requiring partial bit parsing of the video telephony session, and from the group of picture quantizer, actual video frame rate, number of video segments, intra/inter picture, coding tools.

14. The method according to claim 12, the step of selecting video coding dependent parameters requiring full bit parsing of the video telephony session, and from the group of number of intra macroblocks per picture, intra refresh strategy, differential quantizer and average/min/max quantizer per picture, number of macroblocks per segment, average, max and min absolute motion vectors.

15. The method according to claim 1, said parameters further comprising codec independent parameters.

16. The method according to claim 15, comprising the step of selecting said codec independent parameters from the group of CRC error ratio for audio and video, number of CRC error for audio and video, total bitrate, video bitrate, audio bitrate, number of bits per video frame, audio-video synchronization time difference, target video frame rate, video type.

17. The method according to claim 1, determining said objective quality measure based on representations of extracted parameters comprising radio BLER, packet loss, total bitrate, audio-video synchronization time difference, target video frame rate, audio codec, video codec, audio codec mode, and picture quantizer for said video telephony session.

18. An arrangement for quality assessment of a multimedia signal comprising video telephony media in a video telephony system, comprising

means for receiving (10) said multimedia signal;
means for extracting (20) a plurality of parameters of said multimedia signal, and
means for determining (30) an objective quality measure for said video telephony media based on representations of at least three of said extracted parameters, said at least three parameters comprising extracted coding parameters, extracted network parameters and extracted robustness parameters,
wherein said extracting means (20) are adapted for extracting said plurality of parameters without fully decoding said multimedia signal.

19. The arrangement according to claim 18, said extracting means (20) are adapted for extracting said plurality of parameters from an at least partly parsed segment of the video telephony media.

20. The arrangement according to claim 18, said means for extracting (20) are adapted for extracting said plurality of parameters from a fully parsed segment of the video telephony media.


**Patentansprüche**

1. Verfahren zur Qualitätsbewertung für ein Multimediasignal umfassend Videotelefoniemedien für ein Videotelefoniesystem, umfassend die folgenden Schritte:

Empfangen (S10) des Multimediasignals;
Extrahieren (S20) einer Vielzahl von Parametern aus dem Multimediasignal, und
Bestimmen (S30) eines objektiven Qualitätsmaßes für das Videotelefoniemedium, basierend auf Darstellungen von mindestens drei der extrahierten Parameter, wobei die mindestens drei Parameter mindestens eines von jedem von Kodierparametern, Netzwerkparametern und Robustheitsparametern umfassen,

wobei die Vielzahl von Parametern extrahiert wird, ohne das Multimediasignal vollständig zu dekodieren.

2. Verfahren nach Anspruch 1, wobei der Bestimmungsschritt das Berechnen des objektiven Qualitätsmaßes gemäß dem Folgenden umfasst

$$Qual_{pred} = f(c,n,r)$$

wobei $Qual_{pred}$ das Qualitätsmaß oder die Bewertung ist, $f$ eine vorbestimmte ausgewählte Funktion ist, $c$ eine Darstellung von extrahierten Kodierparametern ist, $n$ eine Darstellung von extrahierten Netzwerkparametern ist und $r$ eine Darstellung von extrahierten Parametern ist, welche die Robustheit des Mediums beeinflussen.

3. Verfahren nach Anspruch 1, umfassend das Extrahieren der Vielzahl von Parametern aus einem mindestens teilweise analysierten Segment des Multimediasignals.

4. Verfahren nach Anspruch 1, umfassend das Extrahieren der Vielzahl von Parametern aus einem vollständig analysierten Segment des Multimediasignals.

5. Verfahren nach Anspruch 1, wobei die Netzwerkparameter sowohl Funknetzwerkparameter als auch Transportnetzwerkparameter umfassen.

6. Verfahren nach Anspruch 5, umfassend den Schritt des Auswählens der Funknetzwerkparameter aus der Gruppe des Funk-BLER-Typs oder des Funkträger-Typs.

7. Verfahren nach Anspruch 5, umfassend den Schritt des Auswählens der Transportnetzwerkparameter aus der Gruppe von Paketverlust, Datendurchsatz, Paket-Jitter-Daten, Jitter-Pufferstrategie, IP-Paketgröße, RTP/RTCP-Signalisierung.

8. Verfahren nach Anspruch 1, wobei die Kodierparameter Codec-Informationen umfassen.

9. Verfahren nach Anspruch 8, umfassend den Schritt des Auswählens der Codec-Informationen aus der Gruppe von Audio-Codec, Video-Codec, Video-Codec-Profil, Video-Codec-Ebene.

10. Verfahren nach Anspruch 1, wobei die Kodierparameter von der Audiokodierung abhängige Parameter umfassen.

11. Verfahren nach Anspruch 10, umfassend das Auswählen der von der Audiokodierung abhängigen Parameter aus der Gruppe von Audio-Codec-Modus, Verwenden/Nichtverwenden von DTX.

12. Verfahren nach Anspruch 1, wobei die Kodierparameter von der Videokodierung abhängige Parameter umfassen.

13. Verfahren nach Anspruch 12, wobei der Schritt des Auswählens von videokodierungsabhängigen Parametern eine partielle Bitanalyse der Videotelefoniesitzung erfordert, und aus der Gruppe von Bildquantisierer, aktueller Videobildrate, Anzahl von Videosegmenten, Intra-/Interbild, Kodierwerkzeugen erfolgt.

14. Verfahren nach Anspruch 12, wobei der Schritt des Auswählens von videokodierungsabhängigen Parametern eine vollständige Bitanalyse der Videotelefoniesitzung erfordert, und aus der Gruppe von der Anzahl von Intra-Makroblöcken pro Bild, Intra-Refresh-Strategie, Differentialquantisierer und Mittelwert/Minimum/Maximum-Quantisierer pro Bild, Anzahl der Makroblöcke pro Segment, durchschnittliche, maximale und minimale absolute Bewegungsvektoren erfolgt.

15. Verfahren nach Anspruch 1, wobei die Parameter weiterhin von Codec unabhängige Parameter umfassen.

16. Verfahren nach Anspruch 15, umfassend den Schritt des Auswählens der von Codec unabhängigen Parameter aus der Gruppe von CRC-Fehlerrate für Audio und Video, der Anzahl von CRC-Fehlern für Audio und Video, Gesamtbitrate, Videobitrate, Audiobitrate, Anzahl von Bits pro Videobild, Audio-Video-Synchronisationszeitdifferenz, Zielvideobildrate, Videotyp.

17. Verfahren nach Anspruch 1, umfassend das Bestimmen des objektiven Qualitätsmaßes basierend auf Darstellungen extrahierter Parameter, Funk-BLER, Paketverlust, Gesamtbitrate, Audio-Video-Synchronisationszeitdifferenz, Zielvideobildrate, Audio-Codec, Video-Codec, Audio-Codec-Modus, und Bildquantisierer für die Videotelefoniesitzung.

18. Anordnung zur Qualitätsbewertung eines Multimediasignals umfassend Videotelefoniemedien in einem Videotelefoniesystem, umfassend
Mittel zum Empfangen (10) des Multimediasignals;
Mittel zum Extrahieren (20) einer Vielzahl von Parametern des Multimediasignals, und
Mittel zum Bestimmen (30) eines objektiven Qualitätsmaßes für das Videotelefoniemedium, basierend auf Darstellungen von mindestens drei der extrahierten Parameter, wobei die mindestens drei Parameter extrahierte Kodierparameter, extrahierte Netzwerkparameter und extrahierte Robustheitsparameter umfassen,
wobei die Mittel zum Extrahieren (20) zum Extrahieren der Vielzahl von Parametern ausgelegt sind, ohne das Multimediasignal vollständig zu dekodieren.

19. Anordnung nach Anspruch 18, wobei die Mittel zum Extrahieren (20) dafür ausgelegt sind, die Vielzahl von Parametern aus einem mindestens teilweise analysierten Segment des Videotelefoniemediums zu extrahieren.

20. Anordnung nach Anspruch 18, wobei die Mittel zum Extrahieren (20) dafür ausgelegt sind, die Vielzahl von Parametern aus einem vollständig analysierten Segment des Videotelefoniemediums zu extrahieren.

## Revendications

1. Procédé d'évaluation de qualité pour un signal multimédia comprenant un média de visiophonie pour un système de visiophonie, comprenant les étapes consistant à :

recevoir (S10) ledit signal multimédia ;
extraire (S20) une pluralité de paramètres dudit signal multimédia, et
déterminer (S30) une mesure de qualité objective pour ledit média de visiophonie sur la base de représentations d'au moins trois desdits paramètres extraits, lesdits au moins trois paramètres incluant au moins l'un de chacun parmi des paramètres de codage, paramètres de réseau et paramètres de robustesse,
dans lequel ladite pluralité de paramètres est extraite sans décoder complètement ledit signal multimédia.

2. Procédé selon la revendication 1, ladite étape de détermination comprenant le calcul de ladite mesure de qualité objective selon ce qui suit

$$Qual_{pred} = f(c,n,r)$$

où $Qual_{pred}$ est la mesure ou le score de qualité, $f$ est une fonction sélectionnée prédéterminée, $c$ est une représentation de paramètres de codage extraits, $n$ est une représentation de paramètres de réseau extraits et $r$ est une représentation de paramètres extraits affectant la robustesse du média.

3. Procédé selon la revendication 1, comprenant l'extraction de ladite pluralité de paramètres à partir d'un segment au moins partiellement analysé du signal multimédia.

4. Procédé selon la revendication 1, comprenant l'extraction de ladite pluralité de paramètres à partir d'un segment complètement analysé du signal multimédia.

5. Procédé selon la revendication 1, lesdits paramètres de réseau comprenant à la fois des paramètres de réseau radio et des paramètres de réseau de transport.

6. Procédé selon la revendication 5, comprenant l'étape de sélection desdits paramètres de réseau radio dans le groupe de type BLER radio ou porteuse radio.

7. Procédé selon la revendication 5, comprenant l'étape de sélection desdits paramètres de réseau de transport dans le groupe de perte de paquet, débit de données, données de gigue de paquets, stratégie de tampon de gigue, taille de paquet IP, signalisation RTP/RTCP.

**8.** Procédé selon la revendication 1, lesdits paramètres de codage comprenant des informations de codec.

**9.** Procédé selon la revendication 8, comprenant l'étape de sélection desdites informations de codec dans le groupe de codec audio, codec vidéo, profil de codec vidéo, niveau de codec vidéo.

**10.** Procédé selon la revendication 1, lesdits paramètres de codage comprenant des paramètres dépendant du codage audio.

**11.** Procédé selon la revendication 10, comprenant la sélection desdits paramètres dépendant du codage audio dans le groupe de mode de codec audio, utilisation/non-utilisation de DTX.

**12.** Procédé selon la revendication 1, lesdits paramètres de codage comprenant des paramètres dépendant du codage vidéo.

**13.** Procédé selon la revendication 12, l'étape de sélection des paramètres dépendant du codage vidéo exigeant une analyse syntaxique partielle des bits de la session de visiophonie, et dans le groupe de quantificateur d'image, fréquence réelle de trames vidéo, nombre de segments vidéo, image intra/inter, outils de codage.

**14.** Procédé selon la revendication 12, l'étape de sélection des paramètres dépendant du codage vidéo exigeant une analyse syntaxique complète des bits de la session de visiophonie, et dans le groupe de nombre d'intra macroblocs par image, stratégie d'intra-rafraîchissement, quantificateur différentiel et quantificateur moyen/min/max par image, nombre de macroblocs par segment, vecteurs de mouvement absolu moyens, max et min.

**15.** Procédé selon la revendication 1, lesdits paramètres comprenant en outre des paramètres indépendants du codec.

**16.** Procédé selon la revendication 15, comprenant l'étape de sélection desdits paramètres indépendants du codec dans le groupe de taux d'erreur de CRC pour audio et vidéo, nombre d'erreurs de CRC pour audio et vidéo, débit binaire total, débit binaire vidéo, débit binaire audio, nombre de bits par trame vidéo, différence de temps de synchronisation audio-vidéo, fréquence de trames vidéo cible, type de vidéo.

**17.** Procédé selon la revendication 1, déterminant ladite mesure de qualité objective sur la base de représentations de paramètres extraits comprenant le BLER radio, la perte de paquet, le débit binaire total, la différence de temps de synchronisation audio-vidéo, la fréquence de trames vidéo cible, le codec audio, le codec vidéo, le mode de codec audio, et le quantificateur d'image pour ladite session de visiophonie.

**18.** Agencement pour l'évaluation de qualité d'un signal multimédia comprenant un média de visiophonie dans un système de visiophonie, comprenant
des moyens de réception (10) dudit signal multimédia ;
des moyens d'extraction (20) d'une pluralité de paramètres dudit signal multimédia, et
des moyens de détermination (30) d'une mesure de qualité objective pour ledit média de visiophonie sur la base de représentations d'au moins trois desdits paramètres extraits, lesdits au moins trois paramètres comprenant des paramètres de codage extraits, des paramètres de réseau extraits et des paramètres de robustesse extraits,
dans lequel lesdits moyens d'extraction (20) sont conçus pour extraire ladite pluralité de paramètres sans décoder complètement ledit signal multimédia.

**19.** Agencement selon la revendication 18, lesdits moyens d'extraction (20) sont conçus pour extraire ladite pluralité de paramètres à partir d'un segment au moins partiellement analysé du média de visiophonie.

**20.** Agencement selon la revendication 18, lesdits moyens pour extraction (20) sont conçus pour extraire ladite pluralité de paramètres à partir d'un segment complètement analysé du média de visiophonie.

Fig. 1

Fig. 2

START

RECEIVE MULTIMEDIA SIGNAL COMPRISING VIDEO TELEPHONY MEDIA — S10

EXTRACT MULTIPLE PARAMETERS FROM SIGNAL — S20

DETERMINE OBJECTIVE QUALITY MEASURE FOR SAID MEDIA — S30

END

# Fig. 3

Fig. 4

**EP 2 119 204 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060221942 A
- GB 2424792 A